# EUROPÄISCHE PATENTSCHRIFT

(11) **EP 3 118 385 B1**
(45) Veröffentlichungstag und Bekanntmachung des Hinweises auf die Patenterteilung: **18.04.2018**
(21) Anmeldenummer: 16173800.0
(22) Anmeldetag: 09.06.2016
(51) Int. Cl.: E04C 3/29, E04C 3/12, E04H 12/22

(54) **HOLZLATTE FÜR DEN AUSSENBEREICH**
WOODEN BOARD FOR OUTDOOR USE
PLANCHE EN BOIS POUR L'USAGE À L'EXTÉRIEUR

(30) Priorität: 18.06.2015 CH 8752015
(43) Veröffentlichungstag der Anmeldung: 18.01.2017
(73) Patentinhaber: Schneider, Pascal M., 5303 Würenlingen (CH)
(72) Erfinder: Schneider, Pascal M., 5303 Würenlingen (CH)
(74) Vertreter: Herrmann, Johanna

(56) Entgegenhaltungen:
- EP-A2- 0 679 489
- WO-A1-2004/108388
- DE-U1- 9 209 485

## Beschreibung

Die Erfindung betrifft eine Holzlatte erhöhter Beständigkeit, insbesondere gegen Witterungseinflüsse oder Stösse sowie ein Verfahren zur Herstellung einer derartigen robusten Holzlatte für den Aussenbereich. Derartige Holzlatten können beispielsweise als Absperrungen für Baustellen oder als Zaunlatten zum Einsatz kommen.

Aus dem Stand der Technik ist ein stirnseitiges Einhämmern eines metallischen, wellenförmigen Inserts in die Stirnseiten einer Holzlatte für eine Absperrung für Baustellen bekannt. Dieser Insert soll das Risswachstum über die Lattendicke verhindern. Dieser Insert hat sich nur teilweise in der Praxis bewährt, denn linksseitig sowie rechtsseitig eines sich entlang der Breite der Holzlatte erstreckenden Inserts können trotzdem ungehindert durchgehende Risse entstehen. Das heisst, das Holz wird durch das Einbringen des Inserts zum Teil gespalten oder verletzt. Zudem ist an diesen Stellen die Verletzungsgefahr am grössten. Beim Einhämmern besteht zudem die Gefahr, dass durch die unkontrollierte Krafteinwirkung die Beschädigungen initiiert werden, die eigentlich verhindert werden sollten.

Daher soll verhindert werden, dass durchgehende Risse entstehen und falls diese trotzdem entstehen sollten, dass diese nicht zur Spaltung der Holzlatte in Längsrichtung und zum Abbrechen von Material führen. Zusätzlich soll eine Versiegelung eine Sperrschicht gegen das Eindringen von Wasser und Feuchtigkeit bilden. Die Herstellung einer derartigen Latte soll in einem Sägereibetrieb umsetzbar und grossserientauglich sein.

Aus der WO9834004 ist bekannt, eine Holzlatte mit einer Beschichtung aus einem thermoplastischen Kunststoff zu versehen, wobei der thermoplastische Kunststoff ein Harz umfasst und als Extrudat vorliegt. Das Auftragen oder Eintauchen von reaktiven Harzsystemen wurde allerdings als nicht praktikable Lösung in einem Sägereibetrieb angesehen. Die Lagerung und die Bearbeitungsschritte mit Harzsystemen sind zwar den Klebstoffen und deren Umgang relativ ähnlich. Jedoch ergeben sich bedingt durch die langen Aushärtezeiten und die aufwändige Abfallentsorgung mehrere Nachteile, die in der Praxis dazu führten, diese Variante nicht mehr weiterzuverfolgen.

Aus der WO2004108388 A1 ist ein Verfahren zum Verbinden von Holzbasiselementen mit Kunststoff, insbesondere zur Herstellung von Funktionselementen, mittels eines Spritzgiessverfahrens, bei welchem das Holzbasiselement in eine Spritzgiessform eingelegt und an der bzw. den vorab gewählten Stellen Kunststoffschmelze eingespritzt wird. Die Prozessparameter werden beim Spritzgiessen derart eingestellt, dass die Kunststoffschmelze das Holzbasiselement irreversibel eindrückt und/oder in dieses eindringt und/ oder dieses durchdringt. Dieses Verfahren bedingt die Applikation von hohen Spritzdrücken und ist daher für die vorliegende Anwendung nicht wirtschaftlich einsetzbar. Zudem würde die Trennung von Holz und Kunststoff zu Recyclingzwecken aufwändiger, da die mit Kunststoff durchtränkten Holzteile nicht mehr mechanisch separiert werden können, sondern ein Mahlprozess oder möglicherweise sogar ein Trennverfahren unter Einsatz von Lösungsmitteln für das Recycling erforderlich wären.

Es ist aus der DE19611413 A1 eine Schalplatte für Betonschalungen mit Kantenschutz und Eckverstärkung aus Kunststoff bekannt, die in einem Endbereich der Schalplatte aufgebracht ist. Die Schalplatte weist einen Absatz auf, an welchen eine Zwischenschicht sowie der eigentliche Kantenschutz anschliesst. Die Zwischenschicht ist erforderlich, dass sich der Kantenschutz nicht von der Schalplatte löst, insbesondere als Folge von punktweisen Stossbelastungen, die durch ein Fallereignis auftreten können, was auch in der DE19611382 A1 beschrieben ist.

Das Dokument DE 92 09 485 U zeigt eine Holzlatte gemäß dem Oberbegriff des Anspruchs 1, die eine untere profilierte Spitze aufweist, welche von einem PE-Recycling Kunststoff oder anderem verwitterungsfesten Material ummantelt ist. Die Kunststoffspitze wird durch Einlegen des Stützpfahls in eine Spritzgussform mit hoher Temperatur auf den Pfahlschaft gespritzt und schrumpft beim Erkalten fest um den Schaft.

Aufgabe der Erfindung ist es, eine Holzlatte bereitzustellen, die an den meist beanspruchten Stellen vor Beanspruchungen, die beispielsweise bedingt durch Witterungseinflüsse oder Stösse, die auf die Holzlatte einwirken, geschützt ist und bei welcher eine Ablösung des Kantenschutzes auch bei längerem Gebrauch vermieden werden kann.

Die Aufgabe der Erfindung wird durch eine Holzlatte gemäss Anspruch 1 gelöst. Vorteilhafte Ausführungsbeispiele der Erfindung sind Gegenstand der abhängigen Ansprüche 2 bis 12. Ein Verfahren zur Herstellung einer Holzlatte mit einer Schutzschicht ist Gegenstand der Ansprüche 13 bis 15. Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die Aufgabe der Erfindung wird durch eine Holzlatte gelöst, die ein erstes Endelement und ein zweites Endelement sowie ein sich zwischen den Endelementen erstreckendes Mittelelement umfasst. Das Mittelelement weist eine Mittelelementmantelfläche auf, wobei jedes der ersten und zweiten Endelemente eine Stirnseite der Holzlatte ausbildet. An zumindest eine der Stirnseiten grenzt ein Zwischenstück an. Das Zwischenstück bildet eine Zwischenstückmantelfläche aus, die sich von der Stirnseite bis zur Mittelelementmantelfläche erstreckt. Zumindest eines der ersten und zweiten Zwischenstücke ist von einer Schutzschicht aus Kunststoff umgeben und die zu dem Zwischenstück gehörende Stirnseite ist mit der Schutzschicht aus Kunststoff bedeckt. Zwischen der Mittelelementmantelfläche und der Zwischenstückmantelfläche ist zumindest ein Absatz vorgesehen, sodass sich die Schutzschicht bis zu dem Absatz erstreckt. Eine erste Querschnittsfläche an der Stirnseite des Endelements ist grösser als eine zweite Querschnittsfläche des Endelements, wobei die erste Querschnittsfläche einen grösseren Abstand vom Absatz aufweist als die zweite Querschnittsfläche.

Nach einem Ausführungsbeispiel weist das Endelement eine trapezförmige Grundfläche auf. Die trapezförmige Grundfläche kann einen äusseren Schenkel und einen inneren Schenkel aufweisen. Der äussere Schenkel kann einen grösseren Abstand vom Absatz als der innere Schenkel aufweisen. Der äussere Schenkel kann parallel zum inneren Schenkel verlaufen, wobei der äussere Schenkel eine grössere Länge aufweist als der innere Schenkel. Die das Endelement umgebende Schutzschicht ist somit gemäss dieses Ausführungsbeispiels als eine Schwalbenschwanznut ausgebildet, die auf einem entsprechend geformten Endelement aufliegt, sodass eine formschlüssige Verbindung zwischen dem Endelement und der Schutzschicht ausbildbar ist. Weil die Schutzschicht das Endelement umschliesst und die Schwalbenschwanznut ausfüllt, kann es über die in Richtung des jeweiligen Endes der Holzlatte zunehmende Querschnittsfläche des Endelements nicht abgestreift werden, da die durch das Endelement gebildete Keilform einen Widerstand gegen das Abstreifen ausbildet. Daher wird die Schutzschicht auf der Holzlatte verliersicher gehalten.

Nach einem Ausführungsbeispiel enthält das Endelement einen Vorsprung. Die Querschnittsfläche im Bereich des Vorsprungs ist grösser als die Querschnittsfläche des Endelements im Übergangsbereich zum Absatz.

Nach einem Ausführungsbeispiel enthält das Endelement eine Nut, die unmittelbar an den Absatz anschliesst. In der Nut ist die Querschnittsfläche des Endelements kleiner als in dem an die Nut anschliessenden Bereich des Endelements. Die Nut kann einseitig im Wesentlichen parallel zu der Breitenabmessung des Endelements verlaufen. Sie kann einseitig im Wesentlichen parallel zu der Höhenabmessung des Endelements verlaufen. Die Nut kann auch beidseitig im Wesentlichen parallel zu einer der Breitenabmessungen oder der Höhenabmessungen des entsprechenden Endelements verlaufen. Die Nut ist im Bereich zwischen dem Ende des Endelements und dem Absatz angeordnet. Das heisst, die Nut befindet sich, gesehen in Längsrichtung der Holzlatte, im Bereich ausserhalb des Absatzes, aber innerhalb der Endfläche des Endelements.

Nach einem Ausführungsbeispiel wird das Endelement vollständig von der Schutzschicht umhüllt. Gemäss dieses Ausführungsbeispiels ist die Schutzschicht im Wesentlichen behälterförmig ausgebildet. Die Schutzschicht ist vorzugsweise bis zum Absatz über das Endelement gestülpt, sodass das gesamte Endelement von der Schutzschicht umhüllt ist. Die Schutzschicht schliesst gemäss dieses Ausführungsbeispiels bündig an das Mittelelement an.

Nach einem Ausführungsbeispiel entspricht eine der Breiten- oder Höhenabmessungen des Endelements der entsprechenden Breiten- oder Höhenabmessung des Mittelelements. Gemäss dieses Ausführungsbeispiels kann das Endelement teilweise von der Schutzschicht umgeben sein. Durch die Schutzschicht werden die Zwischenräume ausgefüllt, welche durch einen Breiten- oder Höhenunterschied ausgebildet werden. Gemäss dieses Ausführungsbeispiels ist die Schutzschicht im Wesentlichen u-förmig ausgebildet.

Wenn die Holzlatte für eine Absperrung auf Baustellen verwendet werden soll, werden sowohl das erste Endelement als auch das zweite Endelement mit einer Schutzschicht versehen. Für andere Anwendungen, beispielsweise eine Zaunlatte oder einen Zaunpfahl kann es ausreichend sein, nur eines der Endelemente mit einer Schutzschicht zu versehen, insbesondere, wenn nur ein Endelement der Witterung ausgesetzt ist, das zweite Endelement aber nicht oder in geringerem Ausmass.

Das Mittelelement weist eine erste Mittelelementquerschnittsfläche auf. Die ersten oder zweiten Querschnittsflächen des Endelements sind kleiner als die Mittelelementquerschnittsfläche. Sollte die Mittelelementquerschnittsfläche nicht konstant sein, ist zumindest die Mittelelementquerschnittsfläche im Bereich des Absatzes grösser als zumindest die erste Querschnittsfläche des Endelements

Nach einem Ausführungsbeispiel sind zumindest eine der Mittelelementquerschnittsfläche, der ersten Querschnittsfläche und der zweiten Querschnittsfläche rechteckig oder rechteckförmig. Nach einem weiteren Ausführungsbeispiel sind die erste Querschnittsfläche und die zweite Querschnittsfläche oval oder kreisförmig. Nach einem weiteren Ausführungsbeispiel ist eine der ersten oder zweiten Querschnittsflächen rechteckig sowie die jeweils andere Querschnittsfläche kreisförmig oder oval.

Die Holzlatte nach einem der vorhergehenden Ausführungsbeispiele besteht vorzugsweise aus zwei Elementen, nämlich der Schutzschicht sowie einem Brett. Im Bereich der Endelemente wird das Brett derart bearbeitet, sodass durch ein materialabtragendes Verfahren, wie beispielsweise Sägen oder Fräsen die entsprechenden Querschnittsflächen des Endelements erhalten werden. Mit anderen Worten bestehen gemäss dieses Ausführungsbeispiels das Mittelelement und das oder die Endelemente aus einem Brett und die Schutzschicht umgibt zumindest eines der Endelemente zumindest teilweise.

Die Holzlatte kann nach einem Ausführungsbeispiel auch aus mehreren Brettern zusammengesetzt sein. Die Holzlatte kann auch einen Verbundstoff enthalten, beispielsweise einen Holzwerkstoff, insbesondere eine Spanplatte umfassen oder eine Kombination aus Brettern, Holzwerkstoffen und/oder Spanplatten umfassen. Der Verbund kann mindestens ein Element aus der Gruppe der Kunststoffe, metallischen Werkstoffe oder Holzwerkstoffe umfassen.

Eine Holzlatte nach einem der vorhergehenden Ausführungsbeispiele kann auch als Zaunpfosten verwendet werden.

Insbesondere kann das Mittelelement eine Länge aufweisen, die mindestens 10-mal so gross wie die Länge jedes der Zwischenstücke ist. Nach einem Ausführungsbeispiel weist der Absatz eine Höhe von bis zu 2 cm auf. Nach einem Ausführungsbeispiel weist die Schutzschicht eine Dicke auf, die bis zu 2 cm beträgt. Vorzugsweise liegt die Dicke der Schutzschicht zwischen 0.5 cm und 1.5 cm. Wenn die Schutzschicht, die den durch den Querschnittsunterschied von Zwischenelement und Mittelelement der Holzlatte geschaffenen Raum ausfüllt, in dem angegebenen Dickenbereich liegt, kann die Schmelze von einem einzigen Angusspunkt das gesamte Endelement der Holzlatte umfliessen, ohne dass hierzu ein nennenswerter Schliessdruck aufzubringen ist. Die Schliesskraft der Spritzgiessmaschine kann daher unter 40 t gehalten werden. Hierdurch werden Abfälle, die durch Angussstücke, welche nach Abschluss des Spritzgiessvorgangs auf der Oberfläche der Schutzschicht verbleiben, gering gehalten.

Vorzugsweise ist eine minimale Dicke der Schutzschicht von mindestens 2 mm vorgesehen. Ab einer Dicke von 2 mm werden sämtliche Unebenheiten der Oberfläche des Zwischenstücks durch die Schutzschicht abgedeckt.

Insbesondere kann der Querschnitt des Zwischenstücks mit der Schutzschicht im Wesentlichen dem Querschnitt des Mittelelements entsprechen, wobei ein kantenfreier Übergang zwischen dem Mittelelement und der Schutzschicht erfolgen kann. Wenn die Schutzschicht unmittelbar an das Mittelelement anschliesst, kann einerseits keine Feuchtigkeit zwischen Schutzschicht und Absatz eindringen. Andererseits ist auch die Verletzungsgefahr verringert, weil keine Kante mehr vorhanden ist.

Der Kunststoff kann zumindest ein Element aus der Gruppe der thermoplastischen Kunststoffe enthalten. Unter thermoplastischem Kunststoff wird ein Polymer verstanden, das, wenn es in dem für diesen Werkstoff für Verarbeitung typischen Temperaturbereich wiederholt erwärmt und abgekühlt wird, thermoplastisch bleibt. Unter thermoplastisch wird hierbei insbesondere die Eigenschaft des Polymers verstanden, in einem Temperaturbereich zwischen 60 °C und 450 °C, bevorzugt zwischen 80 °C und 350 °C, wiederholt in der Wärme zu erweichen und beim Abkühlen zu erhärten. Ferner ist das thermoplastische Polymer in erweichtem Zustand wiederholt durch Fliessen als Formteil, Extrudat oder Umformteil zu Formkörpern formbar. Beispielsweise kann der Kunststoff Polypropylen oder Polyamid enthalten oder aus zumindest einem der Kunststoffe aus der Gruppe der Polypropylene oder Polyamide bestehen.

Beispiele für weitere geeignete thermoplastische Polymere sind Polyethylen (PE), Polypropylen (PP), Polystyrol (PS), Acrylnitrilbutadienstyrol (ABS), Styrolacrylnitril (SAN), Polyamide (PA) im allgemeinen, Polyamid 6 (PA 6), Polyamid 6,6 (PA 66), Polyamid 11 (PA 11), Polyamid 12 (PA 12), Polyamid 61 (PA610), Polycarbonat (PC), Polyvinylchorid (PVC), Polyethylenterephtalat (PET), Polyetheretherketon (PEEK), Polyacrylnitril (PAN), Polyamidimid (PAI), Polybutylenterephtalat (PBT), thermoplastisches Polyurethan (TPU), Polyester (PES), Polyvinylakohol (PVA), Polymethylmethacrylat (PMMA), Polysulfon (PSU), Polyphenylensulfid (PPS), Polyphenylensilfon (PPSU), Polyethersulfon (PES), Polyetherimid (PEI), Perfluoralkoxyalkan (PFA), Polychlortrifluorethylen (PCTFE), Polyvinylidenfluorid (PVDF), Polyphthalimid (PPA), Styrol-Butadien (SB), Acryl-Styrol-Acrylester (ASA), Ethylen-Vinylacetat-Copolymer (EVA), Polyaryletherketon (PAEK), Ethylen-Butylacrylat-Copolymer (EBA), Polyoxymethylen (POM), Polybutadien (PBD), Polyisopren (PIP), Polychloropren und/oder Polyalkyvinylether, Polylactide (PLA).

Bevorzugt als thermoplastische Polymere verwendet werden Polyethylen (PE), Polypropylen (PP), Polystyrol (PS), Acrylnitrilbutadienstyrol (ABS), Styrolacrylnitril (SAN), Polyamide (PA), Polycarbonat (PC), Polyvinylchorid (PVC), Polyetheretherketon (PEEK), Polyoxymethylen (POM), Polysulfon (PSU), Polyphenylensulfid (PPS), Polyethersulfon (PES), Polyetherimid (PEI), Polychlortrifluorethylen (PCTFE), Perfluoralkoxyalkan (PFA), Polyvinylidenfluorid(PVDF), Polymethylmethacrylat (PMMA) und/oder thermoplastische Elastomere.

Man unterscheidet, je nach chemischen Aufbau, einerseits zwischen Blockcopolymeren aus einem Makromolekül basierend auf Styrolpolymeren (TPE-S), Polyetheramiden (TPE-A), Polyetherester (TPE-E), thermoplastische Polyurethane (TPE-U)) und - andererseits - Elastomerblends, die nebeneinander aus einer thermoplastischen, unvernetzten und einer teil- und/oder vollvernetzten Phase bestehen.

Die Vernetzung der Elastomerblends erfolgt mittels einer sogenannten dynamischen Vulkanisation, also während der Aufbereitung.

Die Gruppe der thermoplastischen Elastomere auf Basis von Polyolefinblends (TPE-V) ist am weitesten verbreitet.

Darüber hinaus können alle denkbaren Blends oder Copolymere der unterschiedlichen thermoplastischen Kunststoffe verwendet werden.

Weiterhin kommen Kunststoffe in Betracht, die nicht nach dem Spritzgussverfahren verarbeitet werden können, wie Polytetrafluorethylen (PTFE). Diese werden z. B. nach dem Sinterverfahren RAM-Extrusion (Kaltumformen mit anschliessendem Sintern) hergestellt.

Duroplaste sind Kunststoffe, die bei normaler Temperatur hart und spröde sind. Sie sind temperaturbeständig, nicht plastisch verformbar und nicht schmelzbar. Sie sind ferner im Wesentlichen nicht quellbar und im Wesentlichen unlöslich in organischem Lösungsmittel (oder: in organischen Lösungsmitteln). Duroplaste entstehen durch Vernetzung reaktionsfähiger linearer und verzweigter Makromoleküle. Man nennt einen solchen Prozess "Härtung". Das Harz muss zur Formgebung vor der Härtung plastisch geformt werden. Häufig als Synonym für Duroplast wird auch Duromer verwandt.

Duroplastische Kunstharze sind nach dem Aushärten im Allgemeinen glasig starr. Das mechanische Verhalten wird häufig dadurch verbessert, dass die Harze zusammen mit Harzträgern oder Füllstoffen verarbeitet werden (z.B. Gesteinspulver, Talkum, Kieselsäure, Holzmehl, organische oder anorganische Fasern, Glasfasern und Glasgewebe). Ihr Anteil am Endprodukt liegt üblicherweise bei 40-80 Gew.-%. Man spricht im Fachgebiet bei diesen "gefüllten" duroplastischen Kunststoffen auch von "Composites" oder "Verbundwerkstoffen".

Beispiele für rieselfähige Duroplaste sind:
Phenyl-Formaldehyd-Harze (PF), ungesättigte Polyesterharze (UP), MelaminFormaldehyd-Harze (MF), Melamin-Phenol-Formaldehyd-Harze (MPF), Epoxid-Harze (EP), Diallyphthalatharz (DAP) und/oder Silikon-Harze (SI).

Beispiele für teigartige Duroplaste sind: Ungesättigte Polyesterharze (UP) und/oder Vinylester-Harz (VE).

Unter Giessharz versteht man ein Polymer (oder Vorstufen davon) in flüssiger Form, das in ein Formwerkzeug eingebracht (z.B. gegossen) wird, um feste Formteile zu bilden. Beispiele für ein geeignetes Giessharz ist ein Polyurethansystem, umfassend eine Polyolkomponente und eine Polyisocyanatkomponente.

Unter einem Schaumstoff ist ein Polymer zu verstehen, das Zellen aufweist und eine Rohdichte hat, die niedriger ist als die Dichte der Gerüstsubstanz. Beispiele für geeignete Schaumstoffe sind Polyurethanschaumstoffe, erhältlich durch Umsetzung einer Polyolkomponente mit einer Polyisocyanatkomponente. Weitere Beispiele sind Polyethylen-co-vinylacetat (EVA)-Schäume oder geschäumte Polypropylene. Weitere Beispiele sind Thermoplaste, die mit Hilfe von gasliefernden Substanzen oder Substanzen mit geringem Siedepunkt verschäumt wurden, wie geschäumtes Polystyrol (z.B. unter der Bezeichnung Styropor geführt).

Alternativ oder in Kombination mit einem der vorhergehend genannten Kunststoffe kann die Schutzschicht auch nicht-thermoplastische Kunststoffe enthalten, die durch Einspritzen in das Spritzgiesswerkzeug einbringbar sind und in festen Zustand umwandelbar sind, insbesondere Zwei- oder Mehrkomponentensysteme.

Ein Verfahren zur Herstellung einer Holzlatte mit einer Schutzschicht umfasst die nachfolgenden näher erläuterten Schritte. Die Holzlatte, welche ein erstes Endelement und ein zweites Endelement umfasst, sowie ein sich zwischen den Endelementen erstreckendes Mittelelement, welches eine Mittelelementmantelfläche aufweist, ist derart ausgestaltet, dass jedes der ersten und zweiten Endelemente eine Stirnseite der Holzlatte ausbildet. An zumindest eine der Stirnseiten grenzt ein Zwischenstück an. Das Zwischenstück bildet eine Zwischenstückmantelfläche aus, die sich von der Stirnseite bis zur Mittelelementmantelfläche erstreckt. Zwischen der Mittelelementmantelfläche und der Zwischenstückmantelfläche ist zumindest ein Absatz vorgesehen. Diese Holzlatte wird in einem ersten Schritt in ein Spritzgiesswerkzeug eingelegt. Eine Mehrzahl derartiger Holzlatten kann in das Spritzgiesswerkzeug eingelegt werden, wenn das Spritzgiesswerkzeug derart ausgestaltet ist, dass es eine Mehrzahl von Endelementen aufnehmen kann. In einem nachfolgenden zweiten Schritt wird das Zwischenstück im Spritzgiesswerkzeug aufgenommen. Hierzu wird das Zwischenstück zwischen zwei Werkzeughälften eingespannt, wobei von dem Absatz, der Zwischenstückmantelfläche sowie der Stirnseite und von jeder der Werkzeughälften ein Formhohlraum ausgebildet wird, dessen Querschnittfläche von der Stirnseite zum Absatz zunimmt. Der Formhohlraum wird mit einer Polymerschmelze befüllt, die Polymerschmelze wird im Spritzgiesswerkzeug gekühlt und die Holzlatte mit der Schutzschicht, welche von der gekühlten Polymerschmelze gebildet wird, dem Spritzgiesswerkzeug entnommen. Daher ist zumindest eines der ersten und zweiten Zwischenstücke von einer Schutzschicht aus Kunststoff umgeben oder ummantelt. Die zu dem Zwischenstück gehörende Stirnseite ist kann mit der Schutzschicht aus Kunststoff bedeckt sein.

Alternativ oder in Kombination kann sich die Schutzschicht bis zu dem Absatz erstrecken.

Insbesondere kann das Zwischenstück durch ein materialabtragendes Verfahren derart bearbeitet werden, dass eine erste Querschnittsfläche zumindest eines der Zwischenstücke zumindest an einer Stelle des Endelements grösser als eine zweite Querschnittsfläche des Endelements erhalten wird, wobei die erste Querschnittsfläche einen grösseren Abstand vom Absatz aufweist als die zweite Querschnittsfläche.

Insbesondere kann das Zwischenstück des Endelements durch Fräsen erzeugt werden, bevor die Holzlatte in das Spritzgiesswerkzeug eingelegt wird. Nachfolgend wird die erfindungsgemässe Absperrlatte anhand einiger Ausführungsbeispiele dargestellt. Es zeigen
Fig. 1: eine Ansicht einer Holzlatte, die keinen Teil der Erfindung darstellt,
Fig. 2 eine Ansicht einer Holzlatte nach einem Ausführungsbeispiel,
Fig. 3a eine Ansicht einer Holzlatte gemäß der Erfindung,
Fig. 3b die Ansicht der Stirnseite der Holzlatte gemäss Fig. 3a,
Fig. 4a eine Ansicht eines Spritzgiesswerkzeugs,
Fig. 4b einen Schnitt durch das Spritzgiesswerkzeug gemäss Fig.4a,
Fig. 5 eine schematische Darstellung der Zufuhr der Holzlatten zum Spritzgiesswerkzeug,
Fig. 6 eine schematische Darstellung des Spritzgiessvorgangs,
Fig. 7 eine schematische Darstellung der Entnahme einer Holzlatte aus dem Spritzgiesswerkzeug.

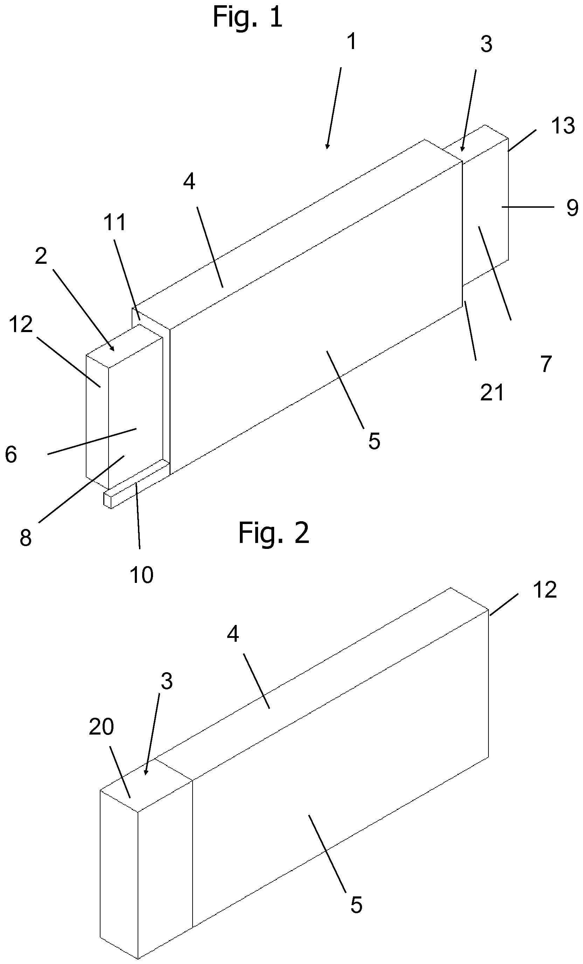

Die Holzlatte 1 der Fig. 1 ist in einer perspektivischen Ansicht dargestellt. Die Holzlatte 1 weist ein erstes Endelement 2 und ein zweites Endelement 3 auf, sowie ein sich zwischen den Endelementen erstreckendes Mittelelement 4. Das Mittelelement 4 weist eine Mittelelementmantelfläche 5 auf. Die Mittelelementmantelfläche bildet die Umfangsfläche des Mittelelements aus. Jedes der ersten und zweiten Endelemente 2,3 bildet eine Stirnseite 12, 13 der Holzlatte aus. An zumindest eine der Stirnseiten 12, 13 grenzt ein Zwischenstück 6, 7 an. Das Zwischenstück 6, 7 bildet eine Zwischenstückmantelfläche 8, 9 aus, die sich von der Stirnseite bis zur Mittelelementmantelfläche 5 erstreckt. Zumindest eines der ersten und zweiten Zwischenstücke 6, 7 ist von einer Schutzschicht 10, 20 aus Kunststoff umgeben und die zu dem Zwischenstück gehörende Stirnseite ist mit der Schutzschicht aus Kunststoff bedeckt. Zwischen der Mittelelementmantelfläche 5 und der Zwischenstückmantelfläche 8, 9 ist zumindest ein Absatz 11, 21 vorgesehen, sodass sich die Schutzschicht 10, 20 bis zu dem Absatz 11, 21 erstreckt.

Insbesondere kann das Mittelelement 4 einen ersten Querschnitt aufweisen. Jedes der Endelemente 2, 3 weist einen zweiten Querschnitt auf. Der erste Querschnitt unterscheidet sich vom zweiten Querschnitt. Insbesondere ist der erste Querschnitt grösser als der zweite Querschnitt. Jedes der Endelemente kann auch einen unterschiedlichen Querschnitt aufweisen. Allerdings ist jeder der Querschnitte jedes der Endelemente kleiner als der Querschnitt des Mittelelements. Der erste Querschnitt und der zweite Querschnitt sind gemäss des vorliegenden Ausführungsbeispiels rechteckig. Der Querschnitt des Zwischenstücks 2,3 mit der Schutzschicht 10 entspricht im Wesentlichen dem Querschnitt des Mittelelements 4. Die Schutzschicht 10 ist in Fig. 1 nur teilweise gezeigt, damit die Struktur der Holzlatte besser sichtbar ist. Die Schutzschicht 10 würde diese Struktur verdecken, daher ist nur ein stabartiger Ausschnitt derselben dargestellt. Die Schutzschicht 20, welche das Zwischenstück 7 sowie die Stirnseite 13 umgibt, ist in dieser Darstellung weggelassen.

Das Mittelelement 4 weist eine Länge auf, die mindestens 10-mal so gross wie die Länge jedes der Zwischenstücke 2,3 ist. Der Absatz 11, 21 kann eine Höhe von bis zu 2 cm aufweisen. Die Schutzschicht 10, 20 ist derart ausgebildet, dass ein kantenfreier Übergang zwischen dem Mittelelement 4 und der Schutzschicht 10, 20 erfolgt.

Fig. 2 zeigt eine Ansicht einer Holzlatte 1 nach einem zweiten Ausführungsbeispiel. Dieses Ausführungsbeispiel unterscheidet sich vom Ausführungsbeispiel gemäss Fig. 1 darin, dass ein Endelement, hier das Endelement 2, weggelassen ist. Diese Variante kommt zum Einsatz, wenn nur eines der Endelemente mit einer Schutzschicht versehen werden muss. Beispielsweise kann eine derartige Holzlatte an einer Seite in einem Fundament aufgenommen sein. Die Stirnseite 12 der Holzlatte ist in diesem Ausführungsbeispiel das Ende des Mittelelements 4, welches dem Endelement 3 gegenüberliegend angeordnet ist. Eine andere Anwendung für eine derartige Holzlatte gemäss Fig. 2 ist beispielsweise eine Zaunlatte. Eine derartige Holzlatte wird mit vertikaler Längsachse angeordnet. Das heisst, insbesondere die oben liegende Stirnseite, in dieser Darstellung die Stirnseite 13, ist in diesem Ausführungsbeispiel Witterungseinflüssen eingesetzt und wird daher mit einer Schutzschicht versehen, um das Eindringen von Nässe in das Endelement 3 zu verhindern.

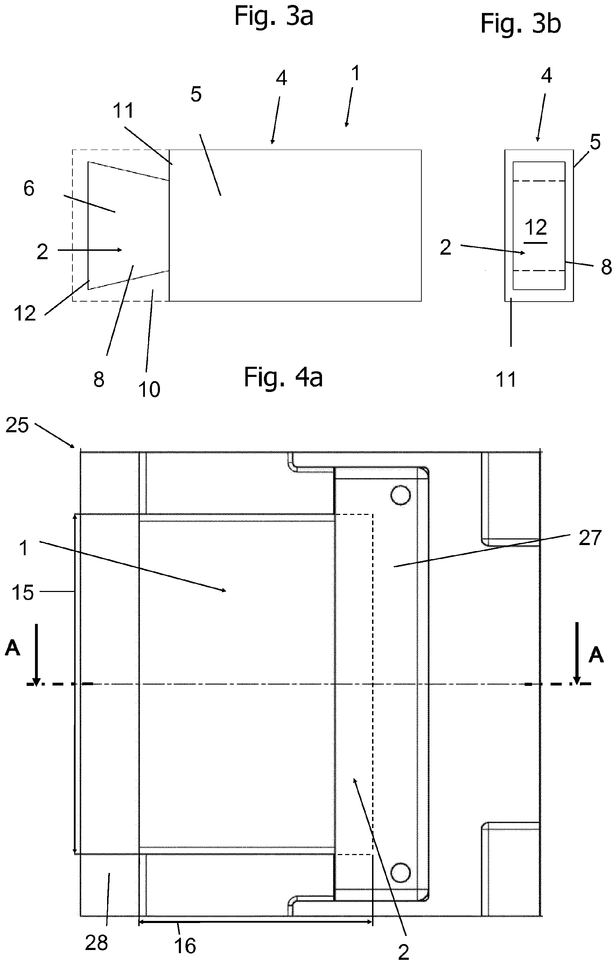

Nach dem in Fig. 3a und Fig. 3b dargestellten Ausführungsbeispiel nimmt der Querschnitt der Zwischenstückmantelfläche vom Absatz bis zur Stirnseite kontinuierlich oder abschnittsweise zu. Beispielsweise kann das Endelement 2 eine Keilform aufweisen, wobei die Basis des Keils die Stirnseite 12 ausbildet. Die Stirnseite 12 sowie die Zwischenstückmantelfläche 8 wird mit der Schutzschicht 10 ummantelt. Die Schutzschicht 10 ist in Fig. 3a nur angedeutet, sodass die Form des Endelements sichtbar ist. Die Schutzschicht reicht bis zum Absatz 11. Die Oberfläche der Schutzschicht 10 geht im Wesentlichen nahtlos in die Mittelelementmantelfläche 5 über.

Die Schutzschicht gemäss jedem der vorhergehenden Ausführungsbeispiele kann auch derart ausgestaltet sein, dass die Aussenkanten derselben gerundet sind. Hierdurch kann zusätzlich die Verletzungsgefahr verringert werden.

Gemäss einem weiteren, nicht dargestellten Ausführungsbeispiel kann an den Absatz 11, 21 eine zu dem Absatz parallel verlaufende Nut im Zwischenstück 6, 7 angebracht sein. Wenn durch den Nutgrund eine Normalebene zur Längsachse gelegt wird, ist der Querschnitt des Zwischenstücks am Nutgrund geringer als an jeder anderen Stelle des Zwischenstücks. Die Nut dient der Aufnahme des Polymers.

Durch die Nut kann einerseits eine Flüssigkeitsbarriere gebildet werden, sodass Flüssigkeit nicht zwischen die Schutzschicht und die Zwischenstückmantelfläche eindringen kann. Andererseits kann die Nut auch dazu dienen, ein Abstreifen der Schutzschicht von der Holzlatte zu verhindern.

Nach einem weiteren, nicht dargestellten Ausführungsbeispiel kann die Zwischenstückmantelfläche und/oder die Stirnseite eine höhere Rauigkeit aufweisen oder mit Rillen versehen werden, um die Haftung der Schutzschicht auf der Oberfläche der Stirnseite oder der Zwischenstückmantelfläche des Endelements zu erhöhen. Eine Vorbehandlung der Zwischenstückmantelfläche und/oder der Stirnseite kann auch zum Einsatz kommen, um die Haftfähigkeit des Kunststoffs auf der Holzoberfläche zu erhöhen.

Ein Verfahren zur Herstellung einer Holzlatte 1 mit einer Schutzschicht 10, 20 nach einem der vorhergehenden Ausführungsbeispiele ist in der Folge beschrieben. Die Holzlatte 1 weist wie in den vorhergehenden Ausführungsbeispielen ein erstes Endelement 2, gegebenenfalls ein zweites Endelement 3 sowie ein sich zwischen den Endelementen erstreckendes Mittelelement 4 auf. Das Mittelelement 4 weist eine Mittelelementmantelfläche 5 auf, wobei jedes der ersten und zweiten Endelemente eine Stirnseite 12, 13 der Holzlatte ausbildet. An zumindest eine der Stirnseiten 12, 13 grenzt ein Zwischenstück 6, 7 an. Das Zwischenstück 6, 7 bildet eine Zwischenstückmantelfläche 8, 9 aus, die sich von der Stirnseite bis zur Mittelelementmantelfläche 5 erstreckt. Zwischen der Mittelelementmantelfläche 5 und der Zwischenstückmantelfläche 8, 9 ist zumindest ein Absatz 11, 21 vorgesehen. In einem ersten Schritt wird die Holzlatte in ein Spritzgiesswerkzeug eingelegt. In einem zweiten Schritt wird das Zwischenstück in dem Spritzgiesswerkzeug derart aufgenommen, dass das Zwischenstück zwischen zwei Werkzeughälften eingespannt wird. Von dem Absatz, der Zwischenstückmantelfläche sowie der Stirnseite und von jeder der Werkzeughälften wird ein Formhohlraum ausgebildet, dessen Querschnittfläche von der Stirnseite zum Absatz zunimmt. Der Formhohlraum wird mit einer Polymerschmelze befüllt, die Polymerschmelze im Spritzgiesswerkzeug gekühlt wird und die Holzlatte mit der Schutzschicht dem Spritzgiesswerkzeug entnommen. Zumindest eines der ersten und zweiten Zwischenstücke 6, 7 ist von einer Schutzschicht 10, 20 aus Kunststoff umgeben und wobei die zu dem Zwischenstück gehörende Stirnseite ist mit der Schutzschicht aus Kunststoff bedeckt ist, wobei sich die Schutzschicht 10, 20 bis zu dem Absatz 11, 21 erstreckt.

Das Zwischenstück wird durch Fräsen erzeugt, bevor die Holzlatte in das Spritzgiesswerkzeug eingelegt wird.

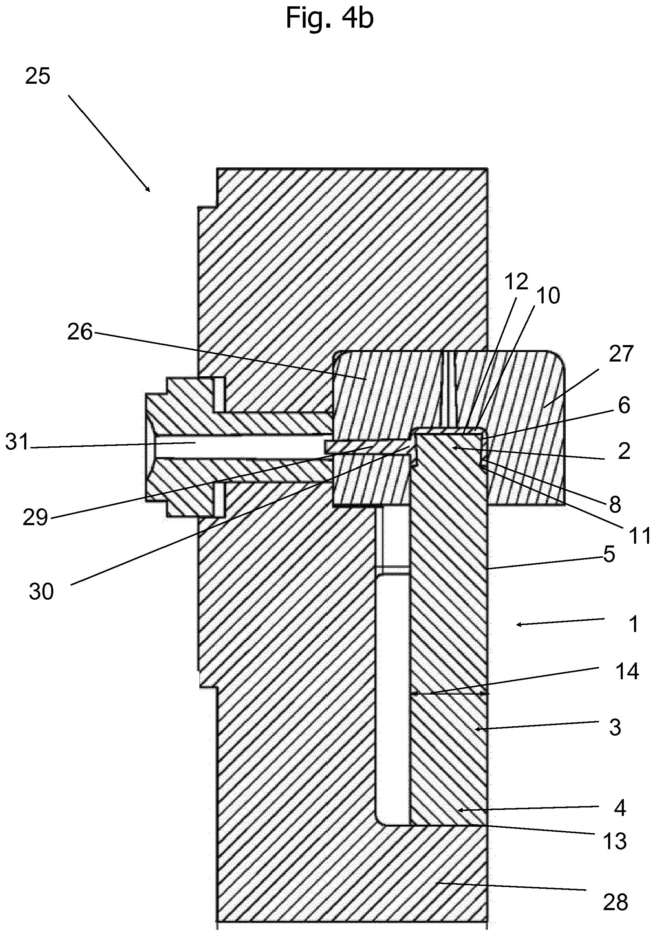

Ein Beispiel für ein Spritzgiesswerkzeug zur Herstellung eines Endelements gemäss Fig. 1 oder Fig. 2 ist in Fig. 4a und Fig. 4b gezeigt.

Fig. 4a zeigt eine Ansicht eines Spritzgiesswerkzeugs 25 mit eingespannter Holzlatte 1. Die Holzlatte 1 weist eine Länge 16 und eine Breite 15 auf, die jeweils mit Doppelpfeilen markiert sind. Im vorliegenden Ausführungsbeispiel ist die Länge 16 kleiner als die Breite 15, um die Details des Spritzgiesswerkzeugs 25 besser darstellen zu können. Ein derartiges Spritzgiesswerkzeug kann auch zur Herstellung von Holzlattenabschnitten zu Testzwecken verwendet werden, beispielsweise um die Herstellung einer Schutzschicht aus Kunststoff zu optimieren. Das erste Endelement 2 ist im Spritzgiesswerkzeug aufgenommen, sodass die Werkzeughälfte 27 das Endelement 2 überdeckt. Der Verlauf des Endelements 2 innerhalb der Werkzeughälfte 27 ist daher durch strichlierte Linien angedeutet. Das Endelement 2 ist zwischen der Werkzeughälfte 27 und einer in der vorliegenden Darstellung dahinter angeordneten Werkzeughälfte angeordnet. Die Werkzeughälften können aus mindestens einem Element der Gruppe der Kunststoffe oder Metalle hergestellt sein. Als Kunststoff kann insbesondere ein Kunststoff zum Einsatz kommen, der sich für ein 3D Druckverfahren eignet. Die Werkzeughälften können im 3D Druckverfahren hergestellt sein. Die Werkzeughälften können nach einem Ausführungsbeispiel aus Aluminium oder Stahl hergestellt sein.

Fig. 4b zeigt einen Schnitt entlang der mit A-A bezeichneten Schnittebene der Fig. 4a. Der Schnitt zeigt einen Abschnitt der Holzlatte 1 der Fig. 1, welche im Spritzgiesswerkzeug eingespannt ist, wobei die Holzlatte entlang einer die Längsachse enthaltenden Ebene oder einer Parallelebene geschnitten dargestellt ist. Das erste Endelement 2 ist zwischen den beiden Werkzeughälften 26, 27 eingespannt. Die Holzlatte 1 wird somit in der vorliegenden Darstellung in vertikaler Position gezeigt. Das zweite Endelement 4 liegt auf einer Haltevorrichtung 28 auf.

Zwischen den Endelementen 2,4 erstreckt sich das Mittelelement 3, dessen Dicke 14 mittels eines Doppelpfeils markiert ist. Das Mittelelement 4 weist eine Mittelelementmantelfläche 5 auf. Die Mittelelementmantelfläche bildet die Umfangsfläche des Mittelelements aus. Jedes der ersten und zweiten Endelemente 2,3 bildet eine Stirnseite 12, 13 der Holzlatte aus. An die Stirnseite 12 grenzt ein Zwischenstück 6 an. Das Zwischenstück 6 bildet eine Zwischenstückmantelfläche 8 aus, die sich von der Stirnseite bis zur Mittelelementmantelfläche 5 erstreckt. Das Zwischenstück 6 wird von einer Schutzschicht 10 aus Kunststoff umgeben und die zu dem Zwischenstück 6 gehörende Stirnseite 12 ist mit der Schutzschicht aus Kunststoff bedeckt. Zwischen der Mittelelementmantelfläche 5 und der Zwischenstückmantelfläche 8 ist ein Absatz 11 vorgesehen, sodass sich die Schutzschicht 10 bis zu dem Absatz 11 erstreckt. Die Schutzschicht füllt somit den Hohlraum zwischen der Stirnseite 12, der Zwischenstückmantelfläche 8, dem Absatz 11 und den diesen Flächen gegenüberliegenden Flächen der Werkzeughälften 26, 27 aus.

Die Werkzeughälfte 26 enthält einen Schmelzekanal 29, welcher der Zufuhr der Kunststoffschmelze in den Hohlraum dient. Der Schmelzekanal kann mit Temperiermitteln ausgestaltet sein, sodass die Schmelze den Hohlraum vollständig ausfüllen kann, ohne vorher auszuhärten. Insbesondere kann der Schmelzekanal durch ein Heizelement beheizbar sein und zumindest eine der Werkzeughälften 26, 27 mit einer Kühlvorrichtung ausgestattet sein, um die Innenwände, welche den Hohlraum begrenzen, zu kühlen.

Das Spritzgiesswerkzeug lässt sich öffnen und schliessen, indem die Werkzeughälfte 26 von der Werkzeughälfte 27 wegbewegt wird. Die Innenseite jeder der Werkzeughälften enthält die äussere Kontur und Oberfläche der Schutzschicht 10. Das Schliessen der Werkzeughälften ermöglicht es, die Holzlatte 1 zu pressen, gerade zu richten und den Kunststoff am Ausströmen aus dem Formnest zu hindern. Ein Angusspunkt wird zur Befüllung des Formnestes an einer vorbestimmten Stelle offen gelassen. Der Schmelzekanal 29 mündet in diesen Angusspunkt 30. In der vorliegenden Darstellung sind der Schmelzekanal 29 und der Hohlraum mit Schmelze gefüllt dargestellt. Der Schmelzezufuhrkanal 31, der mit dem Auslass einer Spritzgiessmaschine verbunden ist, ist in nicht gefülltem Zustand gezeigt. Die Spritzgiessmaschine kann insbesondere als eine sogenannte Vertikalmaschine ausgeführt sein. Die Schliesskraft der Maschine sollte ca. 40t betragen. Beispielsweise kann eine vertikale Spritzgiessmaschine, auch als Vertikalmaschine bezeichnet, der Fa. Aarburg zum Einsatz kommen, siehe beispielsweise: http://www.arburg.com/fileadmin/redaktion/mediathek/prospekte/arburg_vertikale_a Ilrounder_680488 de_gezeigt ist. Alternativ kann eine Wittman Battenfeld Vertikalmaschine zum Einsatz kommen, siehe auch: http://www.wittmann-group.com/uploads/tx_wpsidebar/CM-VM-VMR_de.pdf. Eine vertikale Spritzgiessmaschine kann eine weitgehend mannlose Bedienung ermöglichen, wenn die Zuführung und Transport der Holzlatten durch die Spritzgusseinheit mittels einer Fördervorrichtung erfolgen kann. Die vertikale Bauform der Spritzgiessmaschine sowie des Spritzgiesswerkzeugs ermöglicht es die Holzlatten in flacher Lage ins Werkzeug einzufahren und zu positionieren. Gemäss Fig. 4a ist somit die Aufsicht auf eine derartige Holzlatte gezeigt. Die Werkzeughälfte 27 bewegt sich somit normal zur Zeichnungsrichtung, was bei einer vertikalen Spritzgiessmaschine einer vertikalen Öffnungs- bzw. Schliessbewegung entspricht. Die Form schliesst, indem die beiden Werkzeughälften 26, 27 übereinander positioniert werden und formt ein Endelement der Holzlatte mit einer Schutzschicht 20 aus.

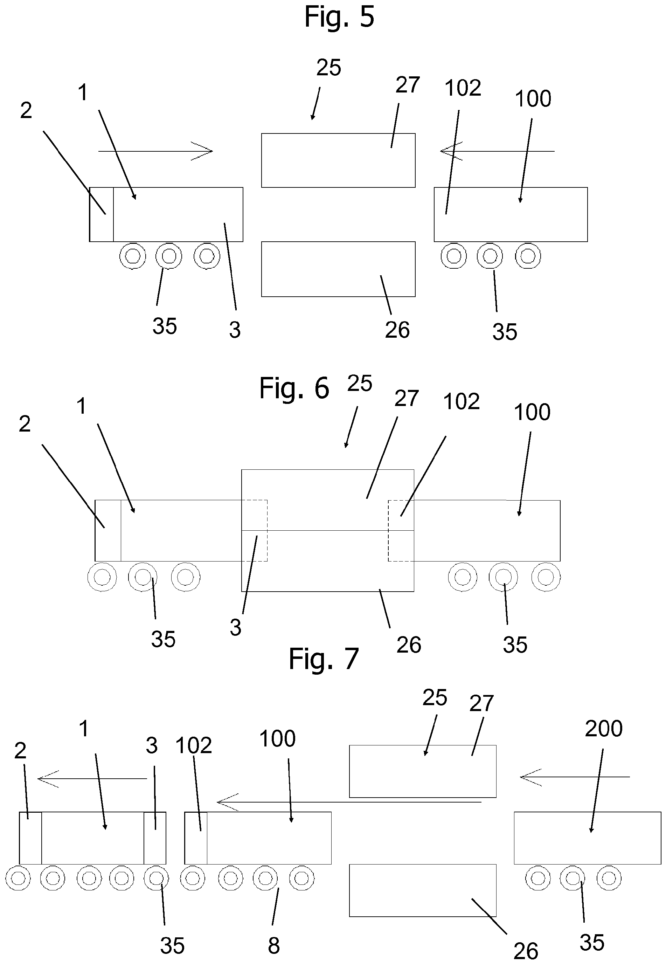

In Fig. 5, 6, 7 ist je eine Skizze der Zuführung der Holzlatte 1 zum Spritzgiesswerkzeug, das Spritzgiessen der Schutzschicht 10 sowie die Entnahme der Holzlatte 1 aus dem Spritzgiesswerkzeug einer Vertikalmaschine gezeigt. Die Holzlatten werden linear verschoben und positioniert. Dies erfolgt mit Hilfe einer Rollenbahn und entsprechendem Handlingsystem, welches die exakte Positionierung der Holzlatte im Spritzgiesswerkzeug 25 übernimmt.

Insbesondere kommt in Fig. 5 ein Spritzgiesswerkzeug 25 zum Einsatz, mittels welchem zwei Endelemente von zwei Holzlatten gleichzeitig hergestellt werden können. Die Holzlatte 1 und eine Holzlatte 100 werden in einem ersten Schritt in den geöffneten Werkzeughälften 26, 27 des Spritzgiesswerkzeugs 25 positioniert.

Ein Robotersystem kann die Holzlatte 1 nach dem Spritzgiessen in Flachlage linear durch das offene Spritzgiesswerkzeug auf die andere Seite transportieren, also in Fig. 5 von der rechten Seite auf die linke Seite des Spritzgiesswerkzeugs. Dieser Verfahrensschritt ist in der Darstellung gemäss Fig. 5 bereits abgeschlossen, da sich die Holzlatte mit der Schutzschicht am zweiten Endelement 2 bereits auf der linken Seite des Spritzgiesswerkzeugs befindet. Damit kann das verbleibende Endelement 3 der Holzlatte 1 im Spritzgiesswerkzeug positioniert werden und gleichzeitig das erste Endelement 102 der nachfolgenden Holzlatte 100 von der gegenüberliegenden Seite in der gleichen Weise in das Spritzgiesswerkzeug eingeführt und positioniert werden. Die in Fig. 5 gezeigten horizontalen Pfeile zeigen die Vorschubrichtungen der Holzlatten 1, 100 an.

Anschliessend wird das Spritzgiesswerkzeug geschlossen, was in Fig. 6 dargestellt ist. Das zweite Endelement 3 einer ersten Holzlatte 1 und das erste Endelement 102 der zweiten Holzlatte 100 werden mit einer Schutzschicht umspritzt. Die Zykluszeit dieses Arbeitsschrittes wird auf ca. 60s inklusive Positionierung und Entnahme veranschlagt.

In Fig. 7 ist die Entnahme der Holzlatten 1, 100 aus dem Spritzgiesswerkzeug gezeigt. Die Holzlatte 1 ist mit einer Schutzschicht an jedem der beiden Endelemente 2, 3 versehen. Die Holzlatte 100 weist eine Schutzschicht an dem ersten Endelement 102 auf. Die Holzlatte weist ein zweites Endelement 103 auf. Wenn dieses Endelement 103 ebenfalls mit einer Schutzschicht versehen werden soll, wird der in Fig. 5 gezeigte Verfahrensschritt für diese Holzlatte 100 sowie für eine ebenfalls gezeigte Holzlatte 200 wiederholt.

Die Zuführung und der Abtransport der Holzlatten erfolgt mittels einer Fördervorrichtung 35. Die Positionierung der Holzlatten im Spritzgiesswerkzeug kann manuell oder mittels einer Manipulationsvorrichtung, beispielsweise einem Robotergreifarm erfolgen.

Die Endelemente gemäss Fig. 1, 3a, 3b weisen Absätze 11, 21 auf. Gemäss einem Ausführungsbeispiel können die Endelemente durch ein Fräsverfahren hergestellt werden. Hierzu kann eine Fräsanordnung mit Linearführung von oben und unten sowie seitlich mit insgesamt 4 Fräsköpfen als eine mögliche Anordnung verwendet werden. In Rollenführungen, in denen die Holzlatten in Längsrichtung bewegt werden, können je zwei Endelemente gleichzeitig bearbeitet werden. Bei Querführung der Holzlatten ist bedingt durch den grossen Abstand der Holzlatten voneinander mit zwei Fräseinheiten zu arbeiten.

### Anwendungsbeispiel (1)

Eine Holzlatte mit den Abmessungen von 1.5 m, einer Breite 10 cm sowie einer Dicke von 5 cm wird derart vorbereitet, dass ein erstes Endelement sowie ein zweites Endelement durch ein Fräsverfahren hergestellt werden. Im Fräsverfahren wird über eine Länge von 10 cm Material über eine Tiefe von 0.5 cm abgetragen. Hierzu wird ein Schwalbenschwanzfräser verwendet, der die Holzlatte in der gewünschten Länge und Tiefe bearbeitet. Alternativ kommt ein Fingerfräser zum Einsatz, der auch entsprechend der am Endelement gewünschten Länge und Tiefe die Holzlatte beschneidet. Die Verwendung eines Schwalbenschwanzfräsers führt zu einer 90° Kante. Die Verwendung eines Fingerfräsers führt zu einer geneigten Kante. Die Querschnittsfläche des Mittelelements beträgt 50 cm². Die Querschnittsfläche des Endelements nach Abschluss des Fräsverfahrens beträgt 36 cm².

Durch das Fräsverfahren wird somit ein Volumen von 140 cm³ abgetragen. Dieses Volumen wird durch leichtfliessendes Polypropylen PP Sabic FPC 100 mit einem MFI (melt flow index) 100 ersetzt, welches die Schutzschicht ausbildet.

Für die Herstellung der Schutzschicht wird ein Werkzeug aus einem ABS Polymer verwendet. Dieses Spritzgiesswerkzeug wurde mittels eines additiven Herstellungsverfahrens erzeugt, beispielsweise mittels einer 3D-Druckvorrichtung gedruckt. Die Schliesskraft und der Einspritzdruck sind im Vergleich zum Standardspritzgiessverfahren wesentlich niedriger, wobei der Einspritzdruck maximal 20 bar beträgt. Dieser Einspritzdruck hat sich in den Versuchen als ausreichend erwiesen, um den Kunststoff in das Formnest einzufüllen. Die notwendige Verdichtung insbesondere der Angusspartie durch den im Spritzgussverfahren üblichen Nachdruck konnte wegen der unzureichenden Stabilität des Prototypenformwerkzeuges nicht erreicht werden, sodass einige der Probekörper auf der Kappe im Angussbereich Bereiche aufweisen, die ungenügend mit Kunststoff gefüllt sind. Durch die Verwendung eines Spritzgiesswerkzeugs höherer Massgenauigkeit oder durch die Wahl eines anderen Werkstoffs für die Werkzeughälften können diese initialen Defekte behoben werden.

Mit diesem Verfahren konnte der Beweis erbracht werden, dass die Herstellung einer thermoplastischen Schutzschicht im Spritzgiessverfahren mittels einem Spritzgiesswerkzeug aus Kunststoff, welches in einem additiven Herstellungsverfahren hergestellt wurde, möglich ist. Es ist festzuhalten, dass die Formgenauigkeit so gut ist, dass auf ein anschliessendes Überhobeln der Schutzschicht verzichtet werden kann, wie es im Verfahren gemäss des Standes der Technik erforderlich ist. Es ist im Gegenteil sogar von Vorteil, die als Kunststoffkappe wirkende Schutzschicht nicht zu hobeln, um die spritzgegossene glatte und gut aussehende Oberfläche zu erhalten.

Bei der Herstellung der Schutzschicht wurden verschiedene Einfärbungen mittels Masterbatch vorgenommen. Die Einfärbungen haben keinen Einfluss auf das Verfahren an sich. Mittels Einfärbungen können auch spezifische Formoberflächen erzeugt werden, beispielsweise reflektierende Oberflächen. Das heisst, die Schutzschicht kann eine reflektierende Oberfläche enthalten. Diese Eigenschaft erhöht die Sichtbarkeit von Absperrlatten bei geringem oder keinem Tageslicht. Derartige Absperrlatten können beispielsweise entlang von Verkehrswegen verwendet werden. Alternativ oder in Ergänzung hierzu kann die Schutzschicht eine fluoreszierende Oberfläche enthalten. Alternativ oder in Ergänzung kann die Holzlatte oder die Schutzschicht eine bedruckte Oberfläche oder eine Oberfläche mit einer Prägung für eine Abbildung oder eine Zeichenfolge, beispielsweise ein Anzeigeelement für eine Richtung, einen Firmennamen oder ein Logo enthalten.

Jede dieser Oberflächen kann leuchtfähig sein, das heisst, insbesondere mit einer Energiequelle koppelbar sein, die ein Beleuchtungselement speist, sodass ein Leuchtsignal oder ein Leuchteffekt erzeugbar ist. Dieses Lichtsignal oder der Leuchteffekt kann beispielsweise ein optisches Warnsignal umfassen oder eine beleuchtete Abbildung oder Zeichenfolge beispielsweise zur Anbringung eines in der Nacht sichtbaren Warnhinweises oder einer Leuchtreklame.

Als Testverfahren zur Beurteilung der mechanischen Beanspruchung der Holzlatte und der Haltbarkeit der Schutzschicht ist ein Falltest durchgeführt worden. Dieser Falltest beinhaltet ein Fallenlassen der Holzlatte auf die Kante aus 1 m bis 1.5 m Fallhöhe. Dabei wird eine Seite der Holzlatte von voller Länge mit einem drehbaren Mechanismus auf der Messhöhe eingespannt. Der Prüfer hebt die Holzlatte auf die Messhöhe und lässt die Holzlatte durch Betätigen des drehbaren Mechanismus auf den Boden fallen. Danach wird qualitativ beurteilt, inwieweit die Schutzschicht der Stirnseite Schaden genommen hat.

Die Testresultate haben gezeigt, dass die üblichen Materialverdichtungen auf der Polymeroberfläche erkennbar gewesen sind, ohne dass es zu Rissen oder gravierenden Schäden gekommen ist.

Es hat sich in den Tests gezeigt, dass ein Fräsen der Holzlatte in Form eines Schwalbenschwanzprofils eine ausreichende Verzahnung von Kunststoff und Holz ergibt. Durch diese mechanische Sicherung ist ein Abreissen der Schutzschicht nicht zu erwarten. Es sind in einer kurzen Beobachtungsperiode von einigen Wochen kein Ablösen der Grenzfläche von Holz und Kunststoff feststellbar gewesen.

Zur Beurteilung der Wirksamkeit hinsichtlich Rissbildung und Rissfortpflanzung ist als Testverfahren ein Einschlagverfahren zum Einsatz gekommen, welches mittels einem Dart Impact Gerät durchgeführt wird. Hierzu wird pfeilförmiger Probekörper aus definierter Höhe auf die Schutzschicht fallen gelassen. Der fallende pfeilförmige Probekörper enthält eine abgerundete Spitze und hat eine definierte Gewichtsladung am hinteren Ende. Der pfeilförmige Probekörper wird durch ein Rohr als Führungselement von bestimmter Höhe auf die zu prüfende Schutzschicht fallen gelassen. Die Schutzschicht ist auf einer Holzlatte von mindestens 1 m Gesamtlänge angebracht. Der Aufschlag des pfeilförmigen Probekörpers auf die Holzlatte soll in 5 cm Längsabstand vom Lattenende in der Mitte der Holzlatte im Querschnitt betrachtet erfolgen. Die Holzlatte liegt auf einer Unterlage, die vom Zentrum des Auftreffpunkts des pfeilförmigen Probekörpers 10 cm im Umkreis offen ist. Ansonsten liegt die Holzlatte flächig auf dem dabei entstehenden Auflagebock auf.

Es wird qualitativ beurteilt, inwiefern die Rissbildung erzeugt werden kann und wie gut die Schutzschicht ein Weiterwandern des Risses verhindern kann.

Des Weiteren wurde eine Beurteilung von Wettereinflüssen auf die Haltbarkeit vorgenommen, wozu Bewitterungsversuche durchgeführt wurden. Hierbei wird eine Holzlatte mit einer Baulänge von ca. 0.5 m über Nacht über mindestens 12 Stunden unter Wasser bei Raumtemperatur getränkt. Dabei quillt das Holz auf. Es wird qualitativ beurteilt, inwiefern das Quellen des Holzes die Anhaftung der Schutzschicht beeinflusst.

Danach wird die noch feuchte Holzlatte im Tiefkühler gefroren. Im Anschluss wird beurteilt, ob Risse entstanden sind und in letzterem Fall, wie die Schutzschicht die Rissbildung dämpft.

Im Anschluss wird der Probekörper bei 100°C getrocknet. Danach wird beurteilt, ob Risse entstanden sind und wie die Schutzschicht die Rissbildung dämpft oder vermindert.

Die Ergebnisse der Tests zu Feuchteverhalten und Temperaturverhalten der Holzlatten mit Schutzschicht haben nachfolgende Resultate geliefert. Die Testverfahren betreffend das Quellen der Holzlatten mit Schutzschicht unter Wasser haben zu erheblichen Volumenänderungen und Spannungen geführt, welche in keiner Weise die thermoplastische Schutzschicht in Mitleidenschaft gezogen haben. Daher wird die Qualität der Holzlatten auch unter widrigen Witterungseinflüssen in überraschender Weise im Vergleich zum Stand der Technik erhöht.

### Anwendungsbeispiele (2) und (3)

An den Holzlatten mit einer Schutzschicht, die wie im vorherigen Anwendungsbeispiel hergestellt worden ist, wurde ein Tauchtest unter Wasser über das Wochenende (Muster 1) oder während 66h (Muster 2) durchgeführt.

Die Resultate haben eine deutliche Volumenzunahme um 5% und eine Gewichtszunahme von 16% gezeigt. Es wurde in einer optischen Prüfung kein Riss oder eine andere Beschädigung der Schutzschicht festgestellt.

Im Anschluss wurden die wassergetränkten Muster auf -20°C in der Klimakammer eingefroren. An den Holzlatten waren nach diesem Test keine besonderen Auffälligkeiten feststellbar.

### Anwendungsbeispiel (4)

Holzlatten, die wie im Anwendungsbeispiel (1) hergestellt worden sind, wurden zyklischen Temperaturbelastungen ausgesetzt. Die Holzlatte gemäss Versuchsreihe (2) ohne Kappe und gemäss Versuchsreihe (3) mit Kappe wurde über eine Zeitdauer von 5h auf einer Temperatur von -20°C gehalten, danach wurde die Holzlatte auf Raumtemperatur erwärmt und anschliessend auf eine Temperatur von 60°C aufgeheizt und während 5h auf dieser Temperatur gehalten. Unter einer Kappe wird dabei eine am Endelement angebrachte Schutzschicht gemäss Anwendungsbeispiel (1) verstanden. Bei diesen Versuchen wurde nur eines der Endelemente mit einer Kappe, d.h. einer Schutzschicht versehen, das zweite Endelement wurde nicht mit einer Schutzschicht versehen.

Danach wurde die Temperatur ohne zwischenzeitliche Befeuchtung auf Raumtemperatur abgesenkt. Die Gesamtversuchsdauer hat für die in untenstehender Tabelle genannten Versuchsreihen (2) und (3) 66h betragen.

Eine Holzlatte gemäss Versuchsreihe (4) mit Kappe wurde während einer Zeitdauer von 66h in Wasser bei Raumtemperatur gelagert, dann über eine Zeitdauer von 5h auf -20° eingefroren, anschliessend auf + 60°C erwärmt und über eine Zeitdauer von 5h auf dieser Temperatur gehalten. Unter einer Kappe wird dabei eine am Endelement angebrachte Schutzschicht gemäss Anwendungsbeispiel (1) verstanden. Danach wurde die Temperatur ohne zwischenzeitige Befeuchtung wieder auf Raumtemperatur abgesenkt. Die Gesamtversuchsdauer hat für die in untenstehender Tabelle 1 genannte Versuchsreihe (4) 78 h und 50 min betragen.

**Tabelle 1**

| Nr. | Bezeichnung | Prozess |
|---|---|---|
| 1 | Referenz mit Kappe | |
| 2 | Holz ohne Kappe | -20°C/5h; +60°/5h ... Gesamtdauer 66h |
| 3 | Holz mit Kappe | -20°C/5h; +60°/5h ... Gesamtdauer 66h |
| 4 | Holz mit Kappe nass | Gelagert in Wasser 66h bei Raumtemperatur 20°C, -20°C/5h; +60°C/5h...Gesamtdauer 78h 50min |

In den Versuchsreihen (2), und (3) und (4) waren keine besonderen Auffälligkeiten der Holzlatten im Vergleich zur Holzlatte gemäss Versuchsreihe (1) feststellbar. Eine Holzlatte mit Kappe gemäss Versuchsreihe (1) ist gemäss Anwendungsbeispiel (1) hergestellt. Diese Holzlatte gemäss Versuchsreihe (1) ist als Referenz bei Raumtemperatur ohne Änderung der Feuchtigkeitsverhältnisse gelagert worden, wobei sie abgesehen von üblichen Schwankungen des Luftfeuchtigkeitsgehalts keinen witterungsbedingten Einflüssen ausgesetzt war. Die Holzlatte der Versuchsreihe (4) ist nach Wasserlagerung 66h bei Raumtemperatur gequollen und hat eine Breite von 152.8 mm an der Seite ohne Schutzschicht, sowie eine Dicke von 20.9 mm an der Seite ohne Schutzschicht aufgewiesen. Das Gewicht der Holzlatte gemäss Versuchsreihe (4) hat nach Wasserlagerung 204.7g betragen.

Die Holzlatte der Versuchsreihe (4) hat nach Wasserlagerung 66h bei Raumtemperatur und nach der Klimalagerung an der Seite ohne Schutzschicht die nachfolgenden Abmessungen aufgewiesen: eine Breite von 145.4 mm, sowie eine Dicke von 19.6 mm. Das Gewicht der Holzlatte gemäss Versuchsreihe (4) hat nach Klimalagerung 176.6 g betragen.

An dem mit einer Kappe bzw. Schutzschicht versehenen Endelement waren keine Veränderungen feststellbar. Daher ist gezeigt worden, dass unter Verwendung der erfindungsgemässen Schutzschicht die Einflüsse der Witterung überraschenderweise nahezu vollständig ausgeschaltet werden können, sodass eine überraschend gute Eignung der Holzlatte für den Aussenbereich, insbesondere für die Verwendung als Absperrlatte für Baustellen nachgewiesen werden konnte.

Ein bevorzugtes Verfahren zur Herstellung einer Holzlatte 1 mit einer Schutzschicht 10 umfasst die nachfolgenden Schritte. Eine Holzlatte wird aus einem Stapel von Holzlatten ausgewählt sowie auf die gewünschte Länge zugeschnitten. Das Zuschneiden kann mittels einer Kappsäge erfolgen. Die zugeschnittenen Holzlatten können zwischengelagert werden, bis sie weiter verarbeitet werden. Hierzu kann eine sogenannte Pufferstation vorgesehen werden. Die zugeschnittenen Holzlatten werden derart gefräst, dass wobei die Holzlatte 1 ein erstes Endelement 2 gegebenenfalls ein zweites Endelement 3 sowie ein sich zwischen den Endelementen erstreckendes Mittelelement 4 aufweist. Das Mittelelement 4 weist nach dem Fräsvorgang eine Mittelelementmantelfläche 5 auf, wobei insbesondere diese Mittelelementmantelfläche 5 noch durch Hobeln bearbeitet werden kann. Jedes der ersten und gegebenenfalls zweiten Endelemente bildet eine Stirnseite 12, 13 der Holzlatte aus. An zumindest eine der Stirnseiten 12, 13 grenzt ein Zwischenstück 6, 7 an. Das Zwischenstück 6, 7 bildet eine Zwischenstückmantelfläche 8, 9 aus, die sich von der Stirnseite bis zur Mittelelementmantelfläche 5 erstreckt. Auch diese Zwischenstückmantelfläche kann durch einen Hobelvorgang bearbeitet werden, mittels welchem insbesondere Kanten abgerundet werden können. Zwischen der Mittelelementmantelfläche 5 und der Zwischenstückmantelfläche ist 8, 9 zumindest ein Absatz 11, 21 vorgesehen, dessen Kanten ebenfalls durch Hobeln abgerundet werden können. Nach diesem Schritt können die Holzlatten zwischengelagert werden, bis sie im nachfolgenden Verarbeitungsschritt weiter bearbeitet werden können. Die Holzlatte wird in diesem Verarbeitungsschritt in ein Spritzgiesswerkzeug eingelegt, wobei in einem weiteren Schritt das Zwischenstück in dem Spritzgiesswerkzeug 25 derart aufgenommen wird, dass das Zwischenstück zwischen zwei Werkzeughälften 26, 27 eingespannt wird. Durch den Absatz 11, 21, der Zwischenstückmantelfläche 8, 9 sowie der Stirnseite 12, 13 und von jeder der Werkzeughälften 26, 27 wird ein Formhohlraum ausgebildet, dessen Querschnittfläche von der Stirnseite zum Absatz zunimmt. Der Formhohlraum wird mit einer Polymerschmelze befüllt, das heisst die Polymerschmelze wird in den Formhohlraum eingespritzt. Insbesondere wird die Polymerschmelze unter Druck in den Formhohlraum eingespritzte. Die Polymerschmelze kann im Spritzgiesswerkzeug gekühlt werden und die Holzlatte mit der die Schutzschicht 10 ausbildenden gekühlten Polymerschmelze entnommen werden. Im Anschluss kann die Länge und/oder die Form der Holzlatte überprüft werden. In der Folge kann eine weitere Zwischenlagerung vorgesehen werden bevor die Holzlatten bedruckt werden können. In einem abschliessenden Schritt können die Holzlatten gestapelt und verpackt werden.

Die Erfindung ist nicht auf die vorliegenden Ausführungsbeispiele beschränkt. Die Holzlatten können insbesondere mit einer Schutzschicht aus einer beliebigen Kombination der genannten Polymere versehen werden. Die Schutzschicht kann mehrere verschiedene Schichten enthalten. Die Schichten können Verbundmaterialien enthalten. Die Querschnitte einer Holzlatte können sich in ihren Abmessungen und ihrer Form unterscheiden. Insbesondere können auch beliebige Querschnittsformen miteinander kombiniert werden.

Für den Fachmann ist offensichtlich, dass viele weitere Modifikationen zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nicht-ausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C... N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Holzlatte (1) umfassend ein erstes Endelement (2) und ein zweites Endelement (3) sowie ein sich zwischen den Endelementen erstreckendes Mittelelement (4), welches eine Mittelelementmantelfläche (5) aufweist, wobei jedes der ersten und zweiten Endelemente eine Stirnseite (12, 13) der Holzlatte ausbildet, wobei an zumindest eine der Stirnseiten (12, 13) ein Zwischenstück (6, 7) angrenzt, wobei das Zwischenstück (6, 7) eine Zwischenstückmantelfläche (8, 9) ausbildet, die sich von der Stirnseite bis zur Mittelelementmantelfläche (5) erstreckt, wobei zumindest eines der ersten und zweiten Zwischenstücke (6, 7) von einer Schutzschicht (10, 20) aus Kunststoff umgeben ist und wobei die zu dem Zwischenstück gehörende Stirnseite mit der Schutzschicht aus Kunststoff bedeckt ist, wobei zwischen der Mittelelementmantelfläche (5) und der Zwischenstückmantelfläche (8, 9) zumindest ein Absatz (11, 21) vorgesehen ist, sodass sich die Schutzschicht (10, 20) bis zu dem Absatz (11, 21) erstreckt, **dadurch gekennzeichnet, dass** das Zwischenstück (6, 7) des Endelements (2, 3) an der Stirnseite (12, 13) eine erste Querschnittsfläche aufweist, die grösser ist, als eine zweite Querschnittsfläche des Zwischenstücks (6, 7) des Endelements (2, 3), wobei die erste Querschnittsfläche einen grösseren Abstand vom Absatz (11, 21) aufweist als die zweite Querschnittsfläche.

2. Holzlatte (1) nach Anspruch 1, wobei das Endelement (2, 3) eine trapezförmige Grundfläche aufweist, wobei die trapezförmige Grundfläche einen äusseren Schenkel und einen inneren Schenkel aufweist, wobei der äussere Schenkel einen grösseren Abstand vom Absatz (11, 21) als der innere Schenkel aufweist, wobei der äussere Schenkel parallel zum inneren Schenkel verläuft, wobei der äussere Schenkel eine grössere Länge aufweist als der innere Schenkel.

3. Holzlatte (1) nach einem der Ansprüche 1 oder 2, wobei das Endelement (2, 3) einen Vorsprung oder eine Nut enthält.

4. Holzlatte (1) nach einem der vorhergehenden Ansprüche, wobei das Mittelelement (4) eine Mittelelementquerschnittsfläche aufweist, wobei zumindest eine der ersten oder zweiten Querschnittsflächen der Endelemente (2, 3) kleiner als die Mittelelementquerschnittsfläche sind.

5. Holzlatte (1) nach einem der vorhergehenden Ansprüche, wobei zumindest eine der Mittelelementquerschnittsflächen, der ersten Querschnittsflächen und der zweiten Querschnittsflächen rechteckig oder rechteckförmig sind.

6. Holzlatte (1) nach einem der vorhergehenden Ansprüche, wobei das Mittelelement eine Länge aufweist, die mindestens 10-mal so gross wie die Länge jedes der Zwischenstücke ist.

7. Holzlatte (1) nach einem der vorhergehenden Ansprüche, wobei der Absatz eine Höhe von bis zu 2 cm aufweist.

8. Holzlatte (1) nach einem der vorhergehenden Ansprüche, wobei der Querschnitt des Zwischenstücks mit der Schutzschicht im Wesentlichen dem Querschnitt des Mittelelements entspricht.

9. Holzlatte (1) nach einem der vorhergehenden Ansprüche, wobei ein kantenfreier Übergang zwischen dem Mittelelement und der Schutzschicht erfolgt.

10. Holzlatte (1) nach einem der vorhergehenden Ansprüche, wobei der Kunststoff zumindest ein Element aus der Gruppe der thermoplastischen Polymere enthält, wobei der Kunststoff insbesondere Polypropylen oder Polyamid enthält oder bevorzugt aus Polypropylen oder Polyamid besteht.

11. Holzlatte (1) nach einem der vorhergehenden Ansprüche, wobei die Schutzschicht (10) das Endelement (2, 3) vollständig umhüllt.

12. Holzlatte (1) nach einem der vorhergehenden Ansprüche, wobei das Mittelelement (4) und das oder die Endelemente (2, 3) aus einem Brett bestehen und die Schutzschicht (10) zumindest eines der Endelemente (2, 3) zumindest teilweise umgibt.

13. Verfahren zur Herstellung einer Holzlatte (1) mit einer Schutzschicht (10), wobei die Holzlatte (1), die ein erstes Endelement (2), ein zweites Endelement (3) sowie ein sich zwischen den Endelementen erstreckendes Mittelelement (4) umfasst, wobei das Mittelelement (4) eine Mittelelementmantelfläche (5) aufweist, wobei jedes der ersten und zweiten Endelemente eine Stirnseite (12, 13) der Holzlatte ausbildet, wobei an zumindest eine der Stirnseiten (12, 13) ein Zwischenstück (6, 7) angrenzt, wobei das Zwischenstück (6, 7) eine Zwischenstückmantelfläche (8, 9) ausbildet, die sich von der Stirnseite bis zur Mittelelementmantelfläche (5) erstreckt, wobei zwischen der Mittelelementmantelfläche (5) und der Zwischenstückmantelfläche (8, 9) zumindest ein Absatz (11, 21) vorgesehen ist, wobei die Holzlatte in einem ersten Schritt in ein Spritzgiesswerkzeug eingelegt wird, wobei in einem zweiten Schritt das Zwischenstück in dem Spritzgiesswerkzeug (25) derart aufgenommen wird, dass das Zwischenstück zwischen zwei Werkzeughälften (26, 27) eingespannt wird, wobei von dem Absatz (11, 21), der Zwischenstückmantelfläche (8, 9) sowie der Stirnseite (12, 13) und von jeder der Werkzeughälften (26, 27) ein Formhohlraum ausgebildet wird, dessen Querschnittfläche von der Stirnseite (12, 13) zum Absatz (11, 21) zunimmt, wobei der Formhohlraum mit einer Polymerschmelze befüllt wird, die Polymerschmelze im Spritzgiesswerkzeug gekühlt wird und die Holzlatte mit der die Schutzschicht (10) ausbildenden gekühlten Polymerschmelze entnommen wird.

14. Verfahren nach Anspruch 13, wobei das Zwischenstück (6, 7) durch ein materialabtragendes Verfahren derart bearbeitet wird, dass eine erste Querschnittsfläche zumindest eines der Zwischenstücke (6, 7) zumindest an der Stirnseite (12, 13) des Endelements erhalten wird, die grösser als eine zweite Querschnittsfläche des Endelements (2, 3) ist, wobei die erste Querschnittsfläche einen grösseren Abstand vom Absatz (11, 21) aufweist als die zweite Querschnittsfläche.

15. Verfahren nach einem der Ansprüche 13 oder 14, wobei das Zwischenstück (6, 7) durch Fräsen erzeugt wird, bevor die Holzlatte in das Spritzgiesswerkzeug eingelegt wird.

## Claims

1. Wooden board (1) comprising a first end element (2) and a second end element (3) and a middle element (4) extending between the end elements, which comprises a middle element jacket surface (5), wherein each of the first and second end elements is configured as a front side (12, 13) of the wooden board, wherein an intermediate piece (6, 7) joins at least one of the front sides (12, 13), wherein the intermediate piece (6, 7) is configured as an intermediate piece jacket surface (8, 9), which extends from the front side to the middle element jacket surface (5), wherein at least one of the first and second intermediate pieces (6, 7) is covered by a protective plastic layer (10, 20) and wherein the front side of the corresponding intermediate piece is covered with a protective plastic layer, wherein at least a shoulder (11, 21) is provided between the middle element jacket surface (5) and the intermediate piece jacket surface (8, 9), such that the protective layer (10, 20) extends to the shoulder (11, 21), **characterized in that** the intermediate piece (6, 7) of the end element (2, 3) comprises a first cross sectional area on the front side (12, 13) which is greater than a second cross sectional area of the intermediate piece (6, 7) of the end element (2, 3), whereby the first cross sectional area has a greater distance from the shoulder (11, 21) than the second cross sectional area.

2. The wooden board (1) of claim 1, wherein the end element (2, 3) comprises a trapezoid base area, wherein the trapezoid base area comprises an outer leg and an inner leg, wherein the outer leg has a greater distance to the shoulder (11, 21) than the inner leg, wherein the outer leg is arranged in parallel to the inner leg, wherein the outer leg is of a greater length than the inner leg.

3. The wooden board (1) of one of claims 1 or 2, wherein the end element (2, 3) comprises a protrusion or a groove.

4. The wooden board (1) of one of the preceding claims, wherein the middle element (4) comprises a middle element cross-sectional area, wherein at least one of the first or second cross-sectional areas of the end elements (2, 3) is smaller than the middle element cross-sectional area.

5. The wooden board (1) of one of the preceding claims, wherein at least one of the middle element cross-sectional areas, the first cross-sectional area and the second cross-sectional areas are rectangular or of a rectangularly shaped.

6. The wooden board (1) of one of the preceding claims, wherein the middle element comprises a length which is at least 10 times the length of each of the intermediate pieces.

7. The wooden board (1) of one of the preceding claims, wherein the shoulder has a height of up to 2 cm.

8. The wooden board (1) of one of the preceding claims, wherein the cross-section of the intermediate piece comprising the protective layer substantially corresponds to the cross-section of the middle element.

9. The wooden board (1) of one of the preceding claims, wherein an edge-free transition is provided between the middle element and the protective layer.

10. The wooden board (1) of one of the preceding claims, wherein the plastic comprises at least an element selected from the group of thermoplastic polymers, wherein the plastic comprises in particular polypropylene or polyamide or most preferably consists of polypropylene or polyamide.

11. The wooden board (1) of one of the preceding claims, wherein the protective layer (10) encloses the end element (2, 3) entirely.

12. The wooden board (1) of one of the preceding claims, wherein the middle element (4) and the end element or the end elements (2, 3) consist of a board and the protective layer (10) encloses at least one of the end elements (2, 3) at least partially.

13. A method for the manufacture of a wooden board (1) comprising a protective layer (10), wherein the wooden board (1) comprising a first end element (2) and a second end element (3) and a middle element (4) extending between the end elements, wherein the middle element (4) comprises a middle element jacket surface (5), wherein each of the first and second end elements is configured as a front side (12, 13) of the wooden board, wherein an intermediate piece (6, 7) joins at least one of the front sides (12, 13), wherein the intermediate piece (6, 7) is configured as an intermediate piece jacket surface (8, 9), which extends from the front side to the middle element jacket surface (5), wherein at least a shoulder (11, 21) is provided between the middle element jacket surface (5) and the intermediate piece jacket surface (8, 9), wherein the wooden board is introduced in a first step into an injection molding tool, wherein the intermediate piece is received such in the injection molding tool (25) that the intermediate piece is tensioned between two tool halves (26, 27), wherein a mold hollow space is formed by the shoulder (11, 21) of the intermediate piece jacket surface (8, 9) and the front side (12, 13) and each of the tool halves (26, 27), wherein the cross-sectional area of the mold hollow space increases from the front side (12, 13) to the shoulder (11, 21), wherein the mold hollow space is filled with a polymer melt, wherein the polymer melt is cooled in the injection molding tool and the wooden board is extracted together with the cooled polymer melt forming the protective layer (10).

14. The method of claim 13, wherein the intermediate piece (6, 7) is worked by a material removing method such that a first cross-sectional area of at least one of the intermediate pieces (6, 7) on at least the front side (12, 13) of the end element is obtained, which is larger than a second cross-sectional area of the end element (2, 3), wherein the first cross-sectional area comprises a greater distance from the shoulder (11, 21) than the second cross-sectional area.

15. The method of one of claims 13 or 14, wherein the intermediate piece (6, 7) is manufactured by milling prior to inserting the wooden board into the injection molding tool.

## Revendications

1. Planche en bois (1) comprenant une première extrémité (2) et une deuxième extrémité (3) et un élément moyen (4) s'étendant entre les extrémités qui comprend une surface de gaine du élément moyen (5) en ce que chacune des premières et deuxièmes extrémités comprend un front (12, 13) de la planche en bois, en ce qu'une pièce intermédiaire (6, 7) avoisine un des fronts (12, 13) en ce que la pièce intermédiaire (6, 7) comprend une surface de gaine de la pièce intermédiaire (8, 9) que s'étend du front jusqu'à la surface de gaine du élément moyen (5), en ce qu'au moins une des premières et deuxièmes pièces intermédiaires (6, 7) est entourée par une couche protectrice (10, 20) en matière plastique et en ce que le front appartenant à la pièce intermédiaire est couvert par la couche protectrice en matière plastique, en ce qu'un épaulement (11, 21) est prévu entre la surface de gaine du élément moyen (5) et la pièce intermédiaire (8, 9) et la couche protectrice (10, 20) s'étend jusqu'à l'épaulement, **caractérisé en ce que** la pièce intermédiaire (6, 7) de l'extrémité (2, 3) comprend une première section transversale au front (12, 13) qui est plus grand qu' une deuxième section transversale de la pièce intermédiaire (6, 7) de l'extrémité (2, 3), **en ce que** la première section transversale a une distance plus grande de l'épaulement (11, 21) que la deuxième section transversale.

2. La planche en bois (1) selon la revendication 1, en ce que l'extrémité (2, 3) comprend une surface de base trapézoïdale, en ce que la surface de base trapézoïdale comprend un côté extérieur et un côté intérieur, en ce que le côté extérieur a une distance plus grande de l'épaulement (11, 21) que le côté intérieur, en ce que le côté extérieur s'étend en parallèle au côté intérieur, en ce que le côté extérieur a une longueur plus grande que le côté intérieur.

3. La planche en bois (1) selon une des revendications 1 ou 2, en ce que l'extrémité (2, 3) comprend une saillie ou une rainure.

4. La planche en bois (1) selon une des revendications précédentes, en ce que l'élément moyen (4) comprend une section transversale de l'élément moyen, en ce qu'au moins une des premières ou deuxièmes sections transversales des extrémités (2, 3) sont plus petites que la section transversale de l'élément moyen.

5. La planche en bois (1) selon une des revendications précédentes, en ce qu'au moins une des sections transversales de l'élément moyen, des premières et deuxièmes sections transversales sont rectangulaires ou de forme rectangulaire.

6. La planche en bois (1) selon une des revendications précédentes, en ce que l'élément moyen comprend une longueur, qui est au moins 10 fois plus grande que la longueur de chacune des pièces intermédiaires.

7. La planche en bois (1) selon une des revendications précédentes, en ce que l'épaulement comprend une altitude maximale de 2 cm.

8. La planche en bois (1) selon une des revendications précédentes, en ce que la section transversale de la pièce intermédiaire avec la couche protectrice correspond substantiellement à la section transversale de l'élément moyen.

9. La planche en bois (1) selon une des revendications précédentes, en ce que la transition entre l'élément moyen et la couche protectrice est sans bords.

10. La planche en bois (1) selon une des revendications précédentes, en ce que la matière plastique comprend au moins un élément du groupe des polymères thermoplastiques, en ce que la matière plastique comprend en particulier au moins le polypropylène ou le polyamide ou est avantageusement constituée en polypropylène ou polyamide.

11. La planche en bois (1) selon une des revendications précédentes, en ce que la couche protectrice (10) couvre l'extrémité (2, 3) entièrement.

12. La planche en bois (1) selon une des revendications précédentes, en ce que l'élément moyen (4) et l'extrémité ou les extrémités (2, 3) sont constitués en une seule planche et la couche protectrice (10) couvre au moins une des extrémités (2, 3) au moins partiellement.

13. Une méthode pour la production d'une planche en bois (1) comprenant une couche protectrice (10), en ce que la planche en bois (1) comprend une première extrémité (2) et une deuxième extrémité (3) et un élément moyen (4) s'étend entre les extrémités qui comprend une surface de gaine du élément moyen (5) en ce que chacune des premières et deuxièmes extrémités comprend un front (12, 13) de la planche en bois, en ce qu'une pièce intermédiaire (6, 7) avoisine un des fronts (12, 13) en ce que la pièce intermédiaire (6, 7) comprend une surface de gaine de la pièce intermédiaire (8, 9) que s'étend du front jusqu'à la surface de gaine du élément moyen (5), en ce qu'un épaulement (11, 21) est prévu entre la surface de gaine du élément moyen (5) et la pièce intermédiaire (8, 9), en ce que la planche en bois est introduite dans une première étape dans un outillage de moulage par injection, en ce que dans une deuxième étape la pièce intermédiaire est reçue de telle manière dans l'outillage de moulage par injection (25), que la pièce intermédiaire est tensionnée entre deux moitiés de l'outillage (26, 27), en ce qu'une espace creuse de moule est formée par l'épaulement (11, 21), la surface de gaine de la pièce intermédiaire (8, 9) et le front (12, 13) et chacune des moitiés de l'outillage (26, 27), en ce que ladite section augmente du front (12, 13) à l'épaulement (11, 21), en ce que l' espace creuse de moule est rempli par une fonte de polymère, la fonte de polymère est refroidi dans l'outillage de moulage par injection et la planche en bois est extraite avec la fonte de polymère refroidi formant la couche protectrice (10).

14. La méthode selon la revendication 13, en ce que la pièce intermédiaire (6, 7) est travaillée par une méthode d'usinage d'une telle manière qu'une première section transversale d'au moins une des pièces intermédiaires (6, 7) est obtenue au moins au front (12, 13) de l'extrémité, qui est plus grande qu'une deuxième section transversale de l'extrémité (2, 3), en ce que la première section transversale a une distance plus grande de l'épaulement (11, 21) que la deuxième section transversale.

15. La méthode selon une des revendications 13 ou 14, en ce que la pièce intermédiaire (6, 7) est produite par un fraisage avant de déposer la planche en bois dans l'outillage de moulage par injection.
